# EUROPÄISCHE PATENTSCHRIFT

(11) **EP 1 838 558 B1**
(45) Veröffentlichungstag und Bekanntmachung des Hinweises auf die Patenterteilung: **24.12.2008**
(21) Anmeldenummer: 06700359.0
(22) Anmeldetag: 03.01.2006
(51) Int. Cl.: B60R 21/01, B60N 2/42

(54) **SICHERHEITSANORDNUNG**
SAFETY DEVICE
DISPOSITIF DE SECURITE

(30) Priorität: 18.01.2005 DE 102005002464
(43) Veröffentlichungstag der Anmeldung: 03.10.2007
(73) Patentinhaber: AUTOLIV DEVELOPMENT AB, 447 83 Vargarda (SE)
(72) Erfinder: BALSER, Werner, 22149 Hamburg (DE); LANGLET, Sylvain, F-60000 Oincourt (FR); HONDIER, Thierry, F-76116 Servaville-Salmonvile (FR); GARRET, Gilles, F-76000 Rouen (FR); UNTERSINGER, Pierre, F-56400 Pluneret (FR); EON, Nicolas, 76220 Gournay en Bray (FR)
(74) Vertreter: Stornebel, Kai
(86) Internationale Anmeldenummer: PCT/EP2006/000017
(87) Internationale Veröffentlichungsnummer: WO 2006/077007

(56) Entgegenhaltungen:
- EP-A- 0 470 413
- EP-A- 0 913 294
- DE-A1- 4 032 381
- DE-A1- 10 057 151

## Beschreibung

Die Erfindung betrifft eine Sicherheitsanordnung in einem Kraftfahrzeug mit einem Fahrzeugsitz und einer Sensoreinrichtung, die mit einer Auswerteeinheit gekoppelt ist, in der Sensordaten ausgewertet werden.

Aus der WO 2004/062962 A1 ist eine gattungsgemäße Sicherheitseinrichtung bekannt, die das Risiko von Verletzungen für einen Fahrzeuginsassen im Falle eines Seitenaufpralles verringert. Innerhalb des Sitzkissens ist eine Krafteinleitungseinrichtung untergebracht, die im Falle eines Seitenaufpralles eine Kraft in Richtung auf den Schwerpunkt des Fahrzeuginsassen ausübt. Dadurch wird der Insasse nach oben und nach innen von einem eindringenden Fahrzeug oder Gegenstand bei einem Seitenaufprall weg bewegt.

Weiterhin ist aus dem Stand der Technik bekannt, dass bei Überschreiten vorgegebener Grenzwerte Sicherheitsgurte vorgespannt und Sitze in eine unfalltechnisch günstige Position verfahren werden.

Die DE 40 32 381 beschreibt ein Abstützelement, das elektromotorisch und sensorgesteuert von einer Ruhestellung in eine Arbeitsstellung neben den Fahrzeugsitz und den Sitznutzer zurück verfahrbar ist. Das Abstützelement dient zur Kopplung des Sitznutzers an den Fahrzeugsitz, jedoch werden keine Teile des Sitzkissens oder der Sitzlehne in Richtung auf den Sitznutzer verformt.

Die DE 100 57 151 A1 beschreibt eine Seitenaufprallschutzvorrichtung und ein Seitenaufprallschutzverfahren mit einem Aufprallsensorelement, durch das einen Aufprall eines Gegenstandes auf eine Längsseite eines Kraftfahrzeuges detektierbar ist Ein Seitenstabilisierungselement wird aus einer Ruhestellung impulsförmig in eine aktivierte Stellung überführt, in der ein stabilisierendes Seitenelement des Kraftfahrzeuges durch das Seitenstabilisierungselement stützbar ist.

Die EP 470 413 A1 beschreibt einen Sitz für Kraftfahrzeuge, wobei im Sitz Sicherheitselemente angeordnet sind, die durch eine Vorrichtung im Gefahrenfall selbsttätig von ihrer Ruheposition im Sitz etwa horizontal in eine Wirkstellung bewegt werden. In der Wirkstellung reichen die Sicherheitselemente bis zu sich an den Fahrzeugsitz seitlich anschließenden Bauteilen heran, welche beispielsweise durch einen weitern Sitz, einen Türschweller oder einer Mitteilsäule gebildet sein können.

Die EP 913 294 A2 beschreibt eine Sicherheitsvorrichtung für ein Kraftfahrzeug mit einem Koppelelement, das am Seitenbereich eines Fahrzeugsitzes vorgesehen ist und das bei einem Seitenaufprall in Richtung der Fahrzeugaußenseite bewegbar ist. Das Koppelelement ist federbetrieben und wird durch eine Verrastung in der Haltung daran gehindert, sich zurückzubewegen.

Aufgabe der vorliegenden Erfindung ist es, die Fahrzeuginsassensicherheit zu verbessern.

Erfindungsgemäß wird diese Aufgabe durch eine Sicherheitsanordnung mit den Merkmalen des Anspruchs 1 gelöst. Vorteilhafte Weiterbildungen und Ausgestaltungen der Erfindung sind in den Unteransprüchen beschrieben.

Die Sicherheitsanordnung in einem Kraftfahrzeug mit einem Fahrzeugsitz und einer Sensoreinrichtung, die mit einer Auswerteeinheit gekoppelt ist, an der Sensordaten ausgewertet werden, sieht vor, dass die Auswerteeinheit mit zumindest einer Antriebseinrichtung gekoppelt ist, über die zumindest ein Kopplungselement, beispielsweise ein energieabsorbierendes Element aus einer Ruhestellung in eine Arbeitsstellung neben den Sitz oder Sitznutzer und zurück verfahrbar ist. Durch die reversible Ausgestaltung des energieabsorbierenden Elementes ist es möglich, bereits im Vorfeld eines Unfalles, insbesondere eines Seitenaufpralles, ein Kopplungselement seitlich neben einen Fahrzeuginsassen, insbesondere in die Nähe des Beckenbereiches des Fahrzeuginsassen, zu verfahren. Dadurch wird eine optimale seitliche Abstützung des Fahrzeuginsassen erhalten, indem der Sitznutzer mit dem Sitz gekoppelt wird, so dass bei einem Seitenaufprall der Sitznutzer zusammen mit dem Sitz bewegt wird und nicht aufgrund der Trägheit des Sitznutzers gegen eine Seitenstruktur prallt. Bei einer energieabsorbierenden Ausgestaltung des Kopplungselementes wird bei einem Seitenaufprall oder Überschlag Intrusionsenergie umgewandelt, so dass die Belastung des Fahrzeuginsassen verringert wird.

Vorteilhafterweise ist das Kopplungselement in der Ruhestellung innerhalb des Fahrzeugsitzes angeordnet und trägt dort beispielsweise als Teil eines Sitzkissens oder Sitzpolsters zur Ausbildung des Fahrzeugsitzes bei. Dabei ist es möglich, dass das Kopplungselement in dem Sitzkissen und/oder in der Sitzlehne angeordnet ist. Durch das Herausfahren aus der Sitzlehne oder aus dem Sitzkissen wird insbesondere der Beckenbereich des Fahrzeuginsassen seitlich gestützt und geschützt, was jedoch im Falle des Nichteintrittes eines Seitenaufpralls oder eines anderen Unfalls rückgängig gemacht werden kann. Ebenfalls kann das Kopptungselement innerhalb des Sitzes verfahren werden und das Sitzpolster in Richtung auf den Sitznutzer verschieben. Dadurch kann der Sitznutzer vorsorglich aus dem potentiellen Gefahrenbereich verlagert und gleichzeitig an den Sitz gekoppelt bzw. in diesen eingeklemmt werden. Auf diese Weise ist es möglich, die Grenzwerte für die von dem Sensor ermittelten Daten zum Verfahren der energieabsorbierenden Elemente zu senken und bereits bei geringerer Unfallwahrscheinlichkeit insassenschützende Maßnahmen einzuleiten.

Um eine effektive Kopplung des Sitzes mit dem Gesamtfahrzeug herzustellen, ist das energieabsorbierende Element bis zu einer Seitenstruktur des Fahrzeuges verfahrbar, insbesondere bis zur Tür oder zur Mittelkonsole des Fahrzeuges.

Eine Ausgestaltungsform der Erfindung sieht vor, dass das energieabsorbierende Element, das in einem Sitzkissen angeordnet ist, in vertikaler Richtung, also nach oben, verfahrbar ist. Alternativ dazu kann dieses in horizontaler Richtung in Richtung auf die Seitenstruktur des Fahrzeuges verfahrbar sein. Ebenfalls ist vorgesehen, dass das Kopplungselement oder das energieabsorbierende Element aus der Sitzlehne nach vorne in die Arbeitsposition verfahrbar ist, um den Fahrzeuginsassen seitlich zu schützen. Das Kopplungselement kann dabei als eine Stützplatte ausgebildet sein, die vorzugsweise mit Energiespeichereinrichtungen oder Energieumwandlungseinrichtungen gekoppelt ist. Als Energiespeichereinrichtungen können beispielsweise Federn oder Gasdämpfer, als Energieumwandlungseinrichtungen Verformungskörper oder Viskokupplungen vorgesehen sein, die Bewegungsenergie in Verformungsenergie oder Wärmeenergie umwandeln.

Eine Weiterbildung der Erfindung sieht vor, dass in dem Sitzkissen oder in der Sitzlehne ein Airbag angeordnet ist, der sich bevorzugt zwischen der Seitenstruktur der Fahrzeuges und dem Sitznutzer entfaltet, wenn ein Sensor einen Unfall sensiert bzw. die Sensordaten vorbestimmte Grenzwerte überschreiten.

Um auch bei einer Höhenverstellung des Sitzes eine korrekte Zuordnung der energieabsorbierenden Elemente zu dem zu schützenden Körperbereich des Fahrzeuginsassen zu gewährleisten, ist das Kopplungselement an dem Sitzrahmen gelagert, so dass eine Verstellung der Neigung der Sitzlehne oder des Sitzkissens sowie der Sitzhöhe keine Nachteile bezüglich der Zuordnung der sicherheitsrelevanten Einrichtungen zu dem Fahrzeuginsassen nach sich zieht.

Der Sensor ist vorteilhafterweise als Radarsensor zur Erfassung eines bevorstehenden Aufpralls ausgebildet, wobei die Sensordaten in der Auswerteeinheit zusammen mit anderen Daten bezüglich einer Unfallwahrscheinlichkeit ausgewertet werden.

Als Antriebseinrichtung für das energieabsorbierende Element ist ein reversibel betreibbarer Elektromotor vorgesehen, mit dem Verfahrbewegungen in die Arbeitsstellung und zurück in die Ruhestellung möglich sind. Alternativ dazu können zwei Elektromotoren dem Element zugeordnet sein, die jeweils nur in eine Richtung antreibbar sind. Alternativ kann das Kopplungselement als eine mit einem Elektromotor gekoppelte Feder ausgebildet sein, die in Ruhestellung vorgespannt ist und zum Bewegen des Elementes in einer Arbeitsstellung entriegelt wird.

Zur Bewirkung einer reversiblen Bewegung ist es vorgesehen, die Feder über einen Elektromotor erneut zu spannen und das energieabsörbierende Element in die Ruhestellung zu verbringen.

Nachfolgend werden Ausführungsbeispiele der Erfindung anhand der Figuren näher erläutert. Es zeigen:
- Figur 1 -: eine schematische Darstellung eines Fahrzeugsitze in Ruhestellung;
- Figur 2 -: einen Fahrzeugsitz gemäß Figur 1 mit energieabsorbierendem Element in Arbeitsstellung;
- Figur 3 -: eine Variante der Figur 2;
- Figur 4: eine Situation während eines Seitenaufpralls;
- Figur 5 -: eine Ausgestaltung eines energieabsorbierenden Elementes;
- Figuren 6 bis 8 -: eine Schnittdarstellung durch eine Sitzlehne; sowie
- Figur 9 -: eine Detaildarstellung einer Sitzlehnenwange.

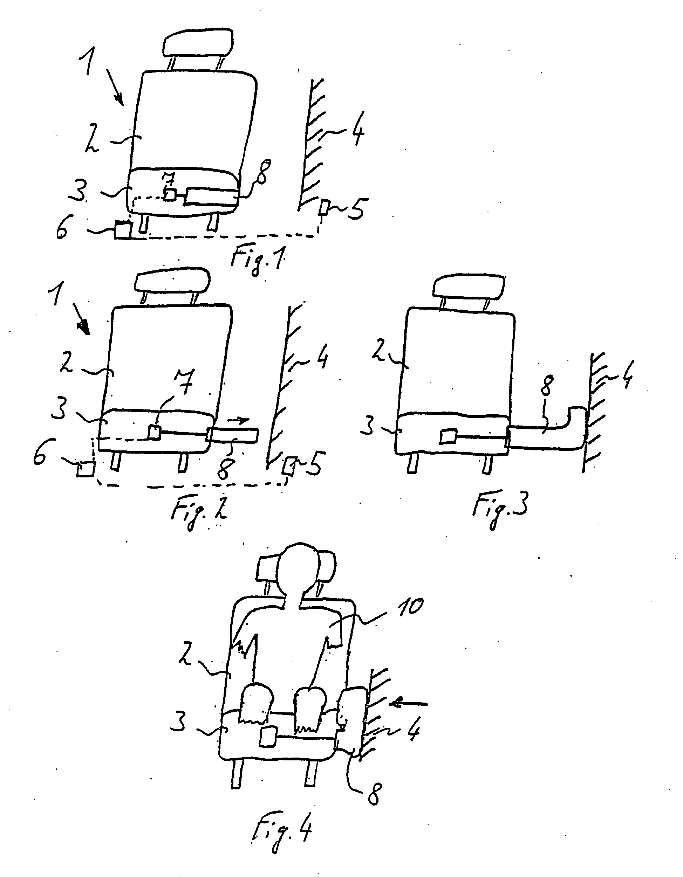

In der Figur 1 ist ein Fahrzeugsitz 1 mit einer Sitzlehne 2 und einem Sitzkissen 3 gezeigt, der an einer Fahrzeugkarosserie eines nicht näher dargestellten Fahrzeuges mit einer Seitenstruktur 4, beispielsweise einer Fahrzeugtür, befestigt ist. In der Seitenstruktur 4 ist ein Sensor 5. zur Erfassung eines bevorstehenden Unfalls angeordnet, der mit einer Auswerteeinheit 6 verbunden ist, die mit einem Antriebselement 7 in Gestalt eines reversibel betreibbaren Elektromotors gekoppelt ist. Wird ein bevorstehender Seitenaufprall sensiert, wird über die Auswerteeinheit 6 ein entsprechendes Signal an die Antriebseinrichtung 7 gesendet, das dann ein im Sitzkissen 3 angeordnetes, Kopplungselement 8, ggf. ein energieabsorbierendes Element in Richtung auf die Seitenstruktur 4, quer zur Fahrtrichtung ausfährt Ein solcher Zustand ist in der Figur 2 gezeigt.

Das Kopplungselement 8 ist dabei innerhalb des Sitzkissens 3 angeordnet und verfährt neben den Sitz 1 zwischen diesen und die Seitenstruktur 4. In der Variante gemäß Figur 2 reicht das Kopplurigselement 8 nicht bis an die Seitenstruktur 4. Bei entsprechender Dimensionierung des Kopplungselementes 8 bzw. der geometrischen Gegebenheiten innerhalb des Fahrzeuges ist es auch vorgesehen, dass sich das Kopplungselement 8 bis an die Seitenstruktur 4 erstreckt und gegebenenfalls elastisch verformt wird, wie es in der Figur 3 dargestellt ist. Sollte es zu keinem Seitenaufprall oder einem Unfall kommen, wird von der Auswerteeinheit 6 ein Signal an die Antriebseinrichtung 7 gesendet und das Kopplungselement 8 wird wiederum quer zur Fahrtrichtung, im Wesentlichen parallel zu der Fahrebene zurück in das Sitzkissen 3 verfahren.

Findet jedoch ein Unfall statt, bei dem beispielsweise die Seitenstruktur 4 in Richtung auf den Fahrzeuginsassen 10 bewegt wird, wie dies in der Figur 4 angedeutet ist, wird das energieabsorbierende Element 8 in Richtung auf den Fahrzeuginsassen bewegt und wandelt Intrusionsenergie in Verformungsenergie um.

Die Erfindung sieht vor, dass das Kopplungselement 8 dergestalt ausgestaltet ist, dass vor einem Seitenaufprall die Verformung von zumindest Teilen der Sitzlehne oder des Sitzkissens in Richtung auf der Sitznutzer so erfolgt, dass der Fahrzeuginsasse 10 von der Seitenstruktur 4 weg bewegt wird, also dass sich das Sitzkissen 3 oder die Sitzlehne 2 so verformt, dass der Fahrzeuginsasse 10 nach innen verlagert wird, bzw. sich nicht relativ in Richtung der Seitenstruktur des Fahrzeuges bewegt.

Im ausgefahrenen Zustand ist das Element 8 verriegelt, beispielsweise indem die Antriebseinrichtung 7 blockiert ist. Das Element 8 kann auch über einen anderen, separaten Verriegelungsmechanismus ortsfest an dem Sitz 1 festgelegt sein.

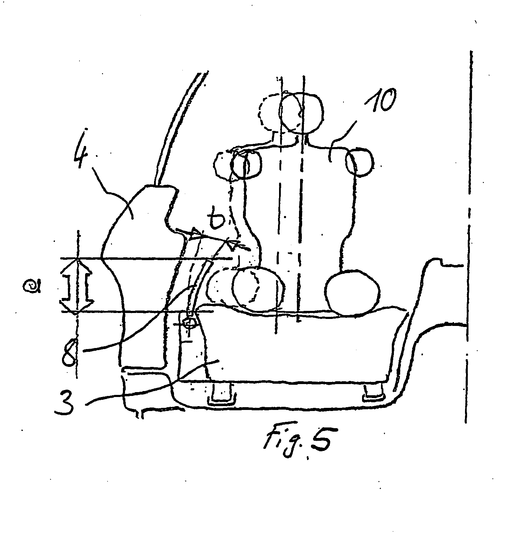

Eine Variante der Erfindung ist in der Figur 5 dargestellt, bei der eine Stützplatte 8 als Kopplungs- oder energieabsorbierendes Element aus einer Ruhestellung neben dem Sitzkissen 3 in eine gezeigte Arbeitsstellung verfahren wird. Der Verfahrweg a ist so bemessen, dass eine geometrische Zuordnung zu einem Beckenbereich des Fahrzeugnutzers 10 gewährleistet ist. Bei einem seitlichen Eindringen eines Gegenstandes oder eines Fahrzeuges wird die Stützplatte 8 in Richtung auf den Fahrzeuginsassen 10 bewegt, wobei ein Energieabsorptionsweg b zur Verfügung steht. Die Stützplatte 8 ist dabei mit energieumwandelnden oder speichernden Einrichtungen, wie Federn oder Verformungskörpem, gekoppelt, so dass in die Fahrzeugstruktur eingeleitete Energie nicht auf den Fahrzeuginsassen 10 übertragen wird. In der nicht dargestellten Ruheposition befindet sich die Stützplatte 8 unterhalb der Sitzfläche neben dem Sitzkissen 3. Die Stützplatte 8 kann verschwenkt oder verschoben werden. Zweckmäßigerweise ist die Stützplatte 8 an einem Sitzrahmen befestigt, so dass auch bei unterschiedlichen Sitzstellungen eine identische, geometrische Zuordnung zum Beckenbereich des Fahrzeuginsassen gewährleistet ist. Alternativ zu einer Anordnung neben dem Sitzkissen 3 kann die Stützplatte 8 auch neben oder in der Sitzlehne 2 angeordnet sein. Durch die Kopplung an den Sitzrahmen wird das Problem einer geometrischen Zuordnung des Elementes 8 zu dem Fahrzeuginsassen 10, unabhängig von der Sitzstellung, gelöst, ohne dass eine aufwendige, mechanische Konstruktion oder eine großflächige Ausbildung der energieabsorbierenden Elemente notwendig wären. Eine reversible Ausgestaltung über eine entsprechende Antriebseinrichtung 7 ermöglicht bereits im Vorfeld eines Unfalles eine optimale Kopplung des Insassen mit dm Fahrzeugsitz 1, wobei im Falle des Nichteintrittes eines Unfalles die Vorsichtsmaßnahmen reversibel sind.

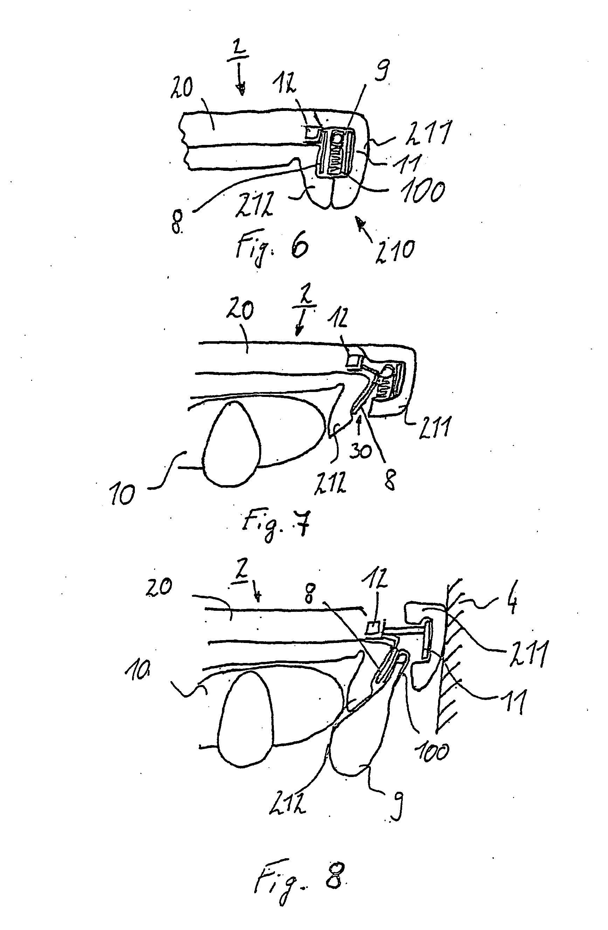

Die Figuren 6 bis 9 zeigen eine Variante der Erfindung, bei der das Kopplungselement 8 in der Sitzlehne 2 angeordnet ist. In der Figur 6 ist in einer Schnittdarstellung ein Teil der Sitzlehne 2 gezeigt, die mehrteilig aufgebaut ist. An einem stationären Lehnenteil 20 ist eine mehrteilige Sitzlehnenwange 210 angeordnet, mit einem äußeren Teil 211 und einem inneren Teil 212. Der äußere Teil 211 ist der nicht dargestellten Seitenstruktur 4 des Fahrzeugs zugewandt, während der innere Teil 212 der Sitzlehnenwange 210 dem Sitznutzer 10 zugeordnet ist. Innerhalb des stationären Lehnenteils 20 ist ein nicht dargestelltes Antriebsmittel in Gestalt eines Elektromotors angeordnet, mit dem der äußere Teil 211 bei Vorliegen entsprechender Sensordaten in Richtung auf die Seitenstruktur 4 oder in Richtung auf den inneren Teil 212 verfahren werden kann. Innerhalb der Sitzlehnenwange 210 ist ein Airbag 9 innerhalb eines Gehäuses 100 untergebracht und von einem Kopplungselement 8 und einem Träger 11 umgeben. Das Kopplungselement 8 kann an dem Sitzrahmen 12 angeordnet sein. Alternativ ist das äußere Sitzwangenteil 211 nicht beweglich ausgebildet.

In der Figur 7 ist das Sicherheitssystem in einem alarmierten Zustand gezeigt, bei dem der Sensor 5 einen drohenden Seitenaufprall erfasst. Über die Antriebsmittel wird das Kopplungselement 8 nach vorn und in Richtung auf den Sitznutzer 10 verlagert, so dass der innere Teil 212 der Sitzlehnenwange 210 an der Schulter anliegt und den Sitznutzer 10 an den Sitz 1 koppelt.

In der Figur 8 ist das Sicherheitssystem in einem ausgelösten Zustand gezeigt, bei dem der äußere Teil 211 der Sitzlehnenwange 210 in Kontakt mit der Seitenstruktur 4 des Kraftfahrzeuges 1 gebracht ist. Der Antriebsmotor hat aufgrund eines von dem Sensor 5 sensierten Objektes einen entsprechenden Befehl über die Auswerteeinheit 7 an den Elektromotor gesendet, der den äußeren Teil 211 zusammen mit dem darin angeordneten Träger 11 in die Arbeitsstellung bewegt. In dieser Stellung ist der äußere Teil 211 der Sitzlehnenwange 210 verriegelt. Aufgrund eines Seitenaufpralls wurde der Airbag 9, der in einer Umhüllung 100 befindlich war, aktiviert und hat sich entfaltet. Das Kopplungselement 8, an dem der Airbag 9 und die Umhüllung 10 befestigt ist, wurde bereits im Vorfeld der Aufpralles in Richtung auf den Sitznutzer 10 durch eine Drehung verschoben, so dass der innere Teil 212 der Sitzlehnenwange 210 in Richtung auf den Sitznutzer 10 bewegt wurde. Ebenfalls wurde durch diese Drehung die Entfattungsrichtung des Airbags 9 in Richtung auf den Sitznutzer 10 gelenkt. Alternativ zu einer Drehung des Kopplungselementes 8 kann auch eine Verschiebebewegung stattfinden. Ebenfalls ist eine Kombination der Bewegungen aus Drehung und Verschiebung möglich.

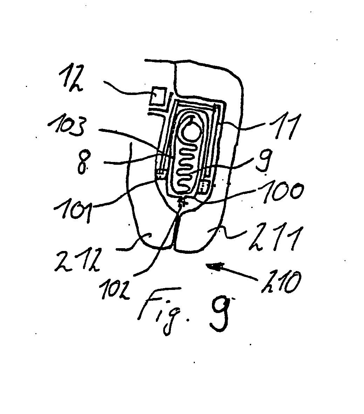

Figur 9 zeigt die Sicherheitsanordnung im Detail in vergrößerter Darstellung. Im geschlossenen Zustand gemäß Figuren 6 und 9 ist der Airbag 9 von einer Umhüllung 100 umgeben, die mit dem Träger 11 und dem Kopplungselement 8 gekoppelt ist. Eine Lasche an dem Kopplungselement 8 greift in eine Aufnahme 10 an der Umhüllung 100 ein. Wird das Kopplungselement 8 in der Sitzlehnenwange 210 nach innen in Richtung auf den Sitznutzer 10 verfahren, wird das Polster der Sitzlehnenwange 210 geöffnet und ein Freiraum 30 gebildet. Ebenfalls wird durch die Verschwenkbewegung die Umhüllung 100 geöffnet, indem die Lasche einen Teil der Umhüllung 10 mit der Aufnahme 101 mit nach innen zieht und einen Verschluss 102 der Umhüllung 10 öffnet. Dieser Verschluss 102 ist vorzugsweise als ein reversibler Schnappverschluss ausgebildet, so dass bei einer Zurückbewegung des Kopplungselementes 8 in Richtung auf den äußeren Teil 211 der Sitzlehnenwange 210 das Gehäuse 100 wieder verschlossen wird. Sobald sich das Kopplungselement 8 nach innen bewegt hat und sich die Umhüllung 100 geöffnet hat, kann der Airbag 9 sich sehr schnell entfalten, da er lediglich eine Weichumhüllung 103 aufzureißen hat, die den Airbag 9 noch im gefalteten Zustand hält. Dadurch wird die Entfaltungsgeschwindigkeit des Airbags 9 erhöht, was für die Sicherheit des Sitznutzers 10 vorteilhaft ist. Sollte der Airbag 9 nicht ausgelöst werden, wird nach einer gewissen Zeitspanne das Kopplungselement 8 aus der in der Figur 7 gezeigten Arbeitsstellung die in der Figur 6 gezeigten Ruhestellung zurückbewegt und die Umhüllung 10 wieder geschlossen.

Die in den Figuren 6 bis 9 gezeigte Anordnung eines Airbags 9 innerhalb einer Sitzlehnenwange 210 kann gleichermaßen auch in einer Sitzkissenwange ausgebildet sein. Der Aufbau ist dabei identisch, lediglich um 90° gedreht.

## Patentansprüche

1. Sicherheitsanordnung in einem Kraftfahrzeug mit einem Fahrzeugsitz und einer Sensoreinrichtung, die mit einer Auswerteeinheit (6) gekoppelt ist, in der Sensordaten ausgewertet werden, wobei die Auswerteeinheit (6) mit zumindest einer Antriebseinrichtung (7) gekoppelt ist, über die zumindest ein Kopplungselement (8) zur Kopplung des Sitznutzers (10) an den Fahrzeugsitz (1) des Fahrzeuges aus einer Ruhestellung in eine Arbeitsstellung neben den Fahrzeugsitz (1) oder den Sitznutzer (10) und zurück verfahrbar ist, **dadurch gekennzeichnet, dass** das Kopplungselement (8) dergestalt in die Arbeitsstellung verfahrbar ist, dass zumindest Teile des Sitzkissens (3) oder der Sitzlehne (2) in Richtung auf den Sitznutzer (10) verformt werden, um eine Relativbewegung des Sitznutzers (10) zur Seitenstruktur des Fahrzeuges zu verhindern.

2. Sicherheitsanordnung nach Anspruch 1, **dadurch gekennzeichnet, dass** das Kopplungselement (8) quer zur Fahrtrichtung verfahrbar ist.

3. Sicherheitsanordnung nach Anspruch 1 oder 2, **dadurch gekennzeichnet, dass** das Kopplungselement (8) als ein energieabsorbierendes Element ausgebildet ist.

4. Sicherheitsanordnung nach einem der voranstehenden Ansprüche, **dadurch gekennzeichnet , dass** das Kopplungselement (8) in der Ruhestellung in dem Fahrzeugsitz (1) angeordnet ist.

5. Sicherheitsanordnung nach einem der voranstehenden Ansprüche, **dadurch gekennzeichnet, dass** das Kopplungselement (8) in dem Sitzkissen (3) oder der Sitzlehne (2) angeordnet ist.

6. Sicherheitsanordnung nach einem der voranstehenden Ansprüche, **dadurch gekennzeichnet, dass** das Kopplungselement (8) bis zu der Seitenstruktur (4) des Fahrzeuges verfahrbar ist.

7. Sicherheitsanordnung nach einem der voranstehenden Ansprüche, **dadurch gekennzeichnet, dass** das Kopplungselement (8) in vertikaler Richtung aus dem Sitzkissen (3) nach oben oder aus der Sitzlehne (2) nach vorn in die Arbeitsposition verfahrbar ist.

8. Sicherheitsanordnung nach einem der Ansprüche 1 bis 5, **dadurch gekennzeichnet, dass** das Kopplungselement (8) in der Arbeitsposition in dem Sitzkissen (3) oder in der Sitzlehne (2) verbleibt.

9. Sicherheitsanordnung nach einem der voranstehenden Ansprüche, **dadurch gekennzeichnet, dass** das Kopplungselement (8) als eine Stützplatte ausgebildet ist.

10. Sicherheitsanordnung nach Anspruch 9, **dadurch gekennzeichnet, dass** die Stützplatte (8) mit Energiespeichereinrichtungen oder Energieumwandlungseinrichtungen gekoppelt ist.

11. Sicherheitsanordnung nach einem der voranstehenden Ansprüche, **dadurch gekennzeichnet, dass** in dem Sitzkissen (3) oder der Sitzlehne (2) ein Airbag angeordnet ist.

12. Sicherheitsanordnung nach einem der voranstehenden Ansprüche, **dadurch gekennzeichnet, dass** das Kopplungselement (8) neben den Beckenbereich und/oder Schulterbereich des Sitznutzers (10) verfahrbar ist.

13. Sicherheitsanordnung nach einem der voranstehenden Ansprüche, **dadurch gekennzeichnet, dass** das Kopplungselement (8) an dem Sitzrahmen gelagert ist.

14. Sicherheitsanordnung nach einem der voranstehenden Ansprüche, **dadurch gekennzeichnet, dass** der Sensor (5) als Radarsensor zur Erfassung eines bevorstehenden Aufpralls ausgebildet ist.

15. Sicherheitsanordnung nach einem der voranstehenden Ansprüche, **dadurch gekennzeichnet, dass** die Antriebseinrichtung (7) als reversibel betreibbarer Elektromotor oder als eine mit einem Elektromotor gekoppelte Feder ausgebildet ist.

## Claims

1. Safety arrangement in a motor vehicle with a vehicle seat and with a sensor device which is coupled to an evaluation unit (6) in which sensor data are evaluated, the evaluation unit (6) being coupled to at least one drive device (7), via which at least one coupling element (8) for coupling the seat user (10) to the vehicle seat (1) of the vehicle can be moved out of a position of rest into a working position next to the vehicle seat (1) or the seat user (10) and back, **characterized in that** the coupling element (8) can be moved into the working position in such a way that at least parts of the seat cushion (3) or of the seat backrest (2) are deformed in the direction of the seat user (10), in order to prevent a relative movement of the seat user (10) with respect to the side structure of the vehicle.

2. Safety arrangement according to Claim 1, **characterized in that** the coupling element (8) is movable transversely with respect to the direction of travel.

3. Safety arrangement according to Claim 1 or 2, **characterized in that** the coupling element (8) is designed as an energy-absorbing element.

4. Safety arrangement according to one of the preceding claims, **characterized in that** the coupling element (8), in the position of rest, is arranged in the vehicle seat (1).

5. Safety arrangement according to one of the preceding claims, **characterized in that** the coupling element (8) is arranged in the seat cushion (3) or the seat back rest (2).

6. Safety arrangement according to one of the preceding claims, **characterized in that** the coupling element (8) can be moved as far as the side structure (4) of the vehicle.

7. Safety arrangement according to one of the preceding claims, **characterized in that** the coupling element (8) can be moved upwards out of the seat cushion (3) in the vertical direction or forwards out of the seat back rest (2) into the working position.

8. Safety arrangement according to one of Claims 1 to 5, **characterized in that** the coupling element (8), in the working position, remains in the seat cushion (3) or in the seat back rest (2).

9. Safety arrangement according to one of the preceding claims, **characterized in that** the coupling element (8) is designed as a supporting plate.

10. Safety arrangement according to Claim 9, **characterized in that** the supporting plate (8) is coupled to energy accumulator devices or energy conversion devices.

11. Safety arrangement according to one of the preceding claims, **characterized in that** an airbag is arranged in the seat cushion (3) or the seat back rest (2).

12. Safety arrangement according to one of the preceding claims, **characterized in that** the coupling element (8) can be moved next to the pelvic region and/or shoulder region of the seat user (10).

13. Safety arrangement according to one of the preceding claims, **characterized in that** the coupling element (8) is mounted on the seat frame.

14. Safety arrangement according to one of the preceding claims, **characterized in that** the sensor (5) is designed as a radar sensor for detecting an imminent impact.

15. Safety arrangement according to one of the preceding claims, **characterized in that** the drive device (7) is designed as a reversibly operable electric motor or as a spring coupled to an electric motor.

## Revendications

1. Dispositif de sécurité dans un véhicule automobile comportant un siège automobile et un dispositif capteur, couplé avec une unité d'exploitation (6) dans laquelle des données de capteur sont exploitées, où l'unité d'exploitation (6) est couplée avec au moins un dispositif d'entraînement (7), par lequel au moins un élément de couplage (8) pour le couplage de l'utilisateur du siège (10) avec le siège automobile (1) du véhicule est déplaçable d'une position de repos jusqu'à une position de travail près du siège automobile (1) ou de l'utilisateur du siège (10), et retour, **caractérisé en ce que** l'élément de couplage (8) est déplaçable dans la position de travail de telle sorte qu'au moins des parties du coussin d'assise (3) ou du dossier du siège (2) soient déformées vers l'utilisateur du siège (10), pour empêcher un déplacement relatif de l'utilisateur du siège (10) par rapport à la structure latérale du véhicule.

2. Dispositif de sécurité selon la revendication 1, **caractérisé en ce que** l'élément de couplage (8) est mobile transversalement au sens de la marche.

3. Dispositif de sécurité selon la revendication 1 ou 2, **caractérisé en ce que** l'élément de couplage (8) est réalisé sous la forme d'un élément absorbant l'énergie.

4. Dispositif de sécurité selon l'une des revendications précédentes, **caractérisé en ce que** l'élément de couplage (8) en position de repos est agencé dans le siège automobile (1).

5. Dispositif de sécurité selon l'une des revendications précédentes, **caractérisé en ce que** l'élément de couplage (8) est agencé dans le coussin d'assise (3) ou le dossier du siège (2).

6. Dispositif de sécurité selon l'une des revendications précédentes, **caractérisé en ce que** l'élément de couplage (8) est déplaçable jusqu'à la structure latérale (4) du véhicule.

7. Dispositif de sécurité selon l'une des revendications précédentes, **caractérisé en ce que** l'élément de couplage (8) est déplaçable dans la position de travail dans la direction verticale, depuis le coussin d'assise (3) vers le haut, ou depuis le dossier du siège (2) vers l'avant.

8. Dispositif de sécurité selon l'une des revendications 1 à 5, **caractérisé en ce que** l'élément de couplage (8), dans la position de travail, reste dans le coussin d'assise (3) ou dans le dossier de siège (2).

9. Dispositif de sécurité selon l'une des revendications précédentes, **caractérisé en ce que** l'élément de couplage (8) est réalisé sous la forme d'une plaque d'appui.

10. Dispositif de sécurité selon la revendication 9, **caractérisé en ce que** la plaque d'appui (8) est couplée avec un dispositif de stockage d'énergie ou un dispositif de conversion d'énergie.

11. Dispositif de sécurité selon l'une des revendications précédentes, **caractérisé en ce qu'**un coussin gonflable est agencé dans le coussin d'assise (3) ou le dossier de siège (2).

12. Dispositif de sécurité selon l'une des revendications précédentes, **caractérisé en ce que** l'élément de couplage (8) est déplaçable près de la zone du bassin et/ou la zone des épaules de l'utilisateur du siège (10).

13. Dispositif de sécurité selon l'une des revendications précédentes, **caractérisé en ce que** l'élément de couplage (8) est supporté sur le bâti du siège.

14. Dispositif de sécurité selon l'une des revendications précédentes, **caractérisé en ce que** le capteur (5) est réalisé sous la forme d'un capteur radar pour l'acquisition d'un choc imminent.

15. Dispositif de sécurité selon l'une des revendications précédentes, **caractérisé en ce que** le dispositif d'entraînement (7) est réalisé sous la forme d'un moteur électrique pouvant fonctionner de façon réversible ou d'un ressort couplé avec un moteur électrique.
